# EUROPÄISCHE PATENTSCHRIFT

(11) **EP 2 268 734 B1**
(45) Veröffentlichungstag und Bekanntmachung des Hinweises auf die Patenterteilung: **10.02.2016**
(21) Anmeldenummer: 09731819.0
(22) Anmeldetag: 14.04.2009
(51) Int. Cl.: C08L 77/12, C08L 77/06, C08L 75/04, C08L 67/02, C08L 59/04, C08L 59/00, C08K 5/29, C08G 18/79, C08G 18/76, C08G 18/56, C08G 18/54, C08G 18/08

(54) **POLYOXYMETHYLEN-FORMMASSEN UND FORMKÖRPER UND DEREN VERWENDUNG**
POLYOXYMETHYLENE MOULDING COMPOSITIONS AND MOULDINGS AND THEIR USE
MATIÈRES À MOULER EN POLYOXYMÉTHYLÈNE, MOULES ET LEUR UTILISATION

(30) Priorität: 16.04.2008 DE 102008018968; 16.04.2008 US 45322 P
(43) Veröffentlichungstag der Anmeldung: 05.01.2011
(60) Teilanmeldung: 15003551.7
(73) Patentinhaber: Ticona GmbH, 65451 Kelsterbach (DE)
(72) Erfinder: KÖSTLER, Christine, 65795 Hattersheim (DE); KURZ, Klaus, 65451 Kelsterbach (DE); LARSON, Lowell, Independence KY 41051 (US)
(74) Vertreter: Lahrtz, Fritz
(86) Internationale Anmeldenummer: PCT/EP2009/002714
(87) Internationale Veröffentlichungsnummer: WO 2009/127387

(56) Entgegenhaltungen:
- EP-A- 0 276 080
- EP-A- 0 342 344
- EP-A- 0 397 493
- EP-A- 0 511 412
- EP-A- 0 565 304
- EP-A- 0 654 501
- WO-A-03/050187
- WO-A-2004/065444
- WO-A-2006/050869
- WO-A-2006/058679
- WO-A-2006/105918
- WO-A-2007/073873
- WO-A-2007/073874
- BRAUN D ET AL: "INFLUENCE OF STRUCTURAL PARAMETERS ON THE DYNAMIC MECHANICAL PROPERTIES OF POLYACETALS" ANGEWANDTE MAKROMOLEKULARE CHEMIE. APPLIED MACROMOLECULARCHEMISTRY AND PHYSICS, WILEY VCH, WEINHEIM, DE, Bd. 228, 1. Januar 1995 (1995-01-01), Seiten 185-200, XP002037592 ISSN: 0003-3146
- ISHIDA S: "POLYMERIZATION OF FORMALDEHYDE AND THE PHYSICAL PROPERTIES OF THE POLYMERIZATION PRODUCTS. I" JOURNAL OF APPLIED POLYMER SCIENCE, JOHN WILEY AND SONS INC. NEW YORK, US, Bd. 26, 1. Januar 1981 (1981-01-01), Seiten 2743-2750, XP002037590 ISSN: 0021-8995
- GROHN H ET AL: "UEBER DEN ZUSAMMENHANG ZWISCHEN DER MOLEKULARGEWICHTSVERTEILUNG UND DEN MECHANISCHEN EIGENSCHAFTEN VON POLYOXYMETHYLENDIAZETATEN" PLASTE UND KAUTSCHUK, LEIPZIG, DE, Bd. 14, Nr. 11, 1. Januar 1967 (1967-01-01), Seiten 795-797, XP002037591

## Beschreibung

Die vorliegende Erfindung betrifft neue Polyoxymethylen-Formmassen, daraus hergestellte Formkörper sowie deren Verwendung, insbesondere als Formmasse für Spritzguss, Blasformen und Extrusion zur Herstellung von Formkörpern jeglicher Art.

Polyoxymethylen (nachstehend auch als "POM" bezeichnet) ist ein Hochleistungspolymer mit guten mechanischen Eigenschaften, wie Steifigkeit und Festigkeit. Allerdings ist POM aufgrund seiner hohen Polarität und Kristallinität häufig nicht oder nur teilweise mit anderen Polymeren verträglich. Ferner ist es nur in Ausnahmefällen möglich, funktionelle Comonomere in POM einzubauen.

Es hat bereits Versuche zur Herstellung von Pfropfpolymeren gegeben, und dabei funktionalisiertes POM einzusetzen.

So beschreiben die EP-A-397,492, die EP-A-398,585 und die EP-A-397,494 funktionalisierte Polyoxymethylene, die durch Copolymerisation von Trioxan und dem Formal des Trimethylolpropan(esters), von Trioxan und den α,α- und α,ß-Isomeren des Glycerinformal(esters) oder von Trioxan und dem Formal des 1,2,6-Hexantriol(esters) hergestellt werden.

Aus der EP-A-400,827 sind Pfropfpolymere bekannt, die sich von funktionali-siertem POM und mit Aminogruppen funktionalisierten Polymeren ableiten. Das funktionalisierte POM weist Acrylat- oder Acrylatestergruppen auf und das mit Aminogruppen funktionalisierte Polymer wird durch Michael Addition an das funktionalisierte POM gebunden. Diese Pfropfpolymeren werden unter anderem zum Einsatz als Phasenvermittler zwischen POM und Polymeren, welche dem Aminogruppen funktionalisierten Polymer ähneln, vorgeschlagen. Nachteilig bei diesen Ansätzen ist, dass die Reaktion nur in Lösung möglich ist.

Aus der EP-A-397,493 sind Propfpolymere bekannt, die sich von mit Hydroxyl-gruppen funktionalisiertem POM, Diisocyanaten und mit Hydroxyl-, Amino- oder Carboxylgruppen funktionalisiertem Polymer ableiten. Letzteres wird durch Diisocyanat-Kopplung an das funktionalisierte POM gebunden. Diese Pfropfpolymeren werden unter anderem zum Einsatz als Phasenvermittler zwischen POM und anderen geeigneten Polymeren vorgeschlagen. Hinweise auf eine Reaktivextrusion unter in-situ Herstellung eines Phasenvermittlers bzw. auf eine Kopplung von Schlagzähmodifizierer an funktionalisiertes POM sind dem Dokument nicht zu entnehmen.

Es ist auch bereits seit langem bekannt, die Schlagzähigkeit von POM durch den Einsatz von Schlagzähmodifikatoren zu beeinflussen. Beispiele dafür sind thermoplastische Polyurethan-Elastomere (nachstehend auch "TPE-U" genannt), Methylmethacrylat / Butadien / Styrol-core-shell-Elastomere, Methylmethacrylat / Acrylat-core-shell-Elastomere, Polycarbonat, Styrol / Acrylnitril-Copolymere oder Acrylat / Styrol / Acrylnitril-Copolymer Compounds. Schlagzäh-modifizierte POM Formmassen enthaltend derartige Zusätze sind beispielsweise aus der EP-A-115,846 und der EP-A-156,285 bekannt.

WO-A-2006/105,918 beschreibt Zusammensetzungen enthaltend Polyoxy-methylen, thermoplastisches Elastomer mit aktiven Wasserstoffatomen, weiteres, aktive Wasserstoffatome enthaltendes Polyoxymethylen und ein Reagenz zur kovalenten Kopplung der letztgenannten Komponenten. Diese schlagzäh-modifizierten POM-Zusammensetzungen zeichnen sich durch eine verbesserte Kombination von Zähigkeit, Bruchdehnung und Bindenahtfestigkeit aus.

Ausgehend von diesem Stand der Technik ist es Aufgabe der vorliegenden Erfindung, weitere schlagzäh-modifizierte POM-Zusammensetzungen bereitzustellen, die sich durch eine außerordentlich hohe Kerbschlagzähigkeit auszeichnen.

Es wurde jetzt überraschend gefunden, dass sich durch den Einsatz der nachstehend definierten Komponenten Formmassen erhalten lassen, die zur Formkörpern mit außerordentlich hohen Kerbschlagzähigkeiten von über 100 kJ/m² verarbeitet werden können. Herkömmliche Formkörper aus nicht modifzierten POM-Zusammensetzungen weisen typischerweise Kerbschlag-zähigkeiten von etwa 10 bis 15 kJ/m² auf. Die Versuche haben gezeigt, dass der Gehalt an niedermolekularen Bestandteilen In schlagzäh-modifiziertem POM, sowie dessen Viskosität in der Formmasse einen erheblichen Einfluss auf die zu erreichende Kerbschlagzähigkeit ausmachen.

Die Erfindung betrifft eine Formmasse enthaltend
a) 30 bis weniger als 95 Gew.-%, bezogen auf die Gesamtmasse der Formmasse, Polyoxymethylen, bei dem mindestens 50 % der Endgruppen Hydroxylgruppen sind, das einen Schmelzflussindex MVR von kleiner als 20 cm³ /10 Minuten aufweist, gemessen nach ISO 1133 bei 190°C und 2,16 kg, und dessen Anteil an niedermolekularen Bestandteilen mit Molekulargewichten unterhalb von 10.000 Dalton von 0 bis weniger als 5 Gew. % beträgt, bezogen auf die Gesamtmasse des Polyoxymethylens,
b) mindestens 5 Gew.-% thermoplastisches Elastomer, dadurch gekennzeichnet, dass das thermoplastische Elastomer aktive Wasserstoffatome aufweist und dass mindestens eine Komponente c) vorhanden ist, die Gruppen zur kovalenten Kopplung der Komponenten a) und b) in einer Menge von mehr als 0 bis 10 Gew.-% enthält.

Ferner beschrieben werden Formmassen enthaltend
a) Polyoxymethylen, bei dem mindestens 50 % der Endgruppen Hydroxyl-gruppen sind, das einen Schmelzflussindex MVR von kleiner als 20 cm³ / 10 Minuten aufweist, gemessen nach ISO 1133 bei 190°C und 2,16 kg, und dessen Anteil an niedermolekularen Bestandteilen mit Molekulargewichten unterhalb von 10.000 Dalton weniger als 15 Gew. % beträgt, bezogen auf die Gesamtmasse des Polyoxymethylens, und
b) thermoplastisches Elastomer.

Komponente a) der Formmasse ist ein Polyoxymethylen-homo-oder -copolymeres, das einen hohen Gehalt an Hydroxylendgruppen aufweist, sowie keine oder nur einen geringen Anteil an niedermolekularen Bestandteilen enthält.

Das Polyoxymethylen der Komponente a) weist endständige Hydroxylgruppen auf, beispielsweise Hydroxyethylengruppen, und/oder das Polyoxymethylen weist seitenständige Hydroxylgruppen auf.

Der Gehalt an end- und/oder seitenständigen Hydroxylgruppen (insgesamt auch als "Hydroxylendgruppen" bezeichnet) beträgt typischerweise mindestens 50 %, bezogen auf sämtliche Endgruppen, vorzugsweise mindestens 70 %. Unter dem Begriff "sämtliche Endgruppen" sind im Rahmen dieser Beschreibung alle endständigen und - falls vorhanden - alle seitenständigen Endgruppen zu verstehen.

Neben den Hydroxylendgruppen kann das POM der Komponente a) noch andere für diese Polymeren üblichen Endgruppen aufweisen. Beispiele dafür sind Alkoxygruppen, Formiatgruppen, Acetatgruppen oder Aldehydgruppen.

Bei den Polyoxymethylenen der Komponente a) handelt es sich um Homo- oder Copolymere mit wiederkehrenden Struktureinheiten der Formel -O-CH₂-, die mit end- und/oder seitenständigen Hydroxylgruppen funktionalisiert sind. Diese POM-Typen können sich durch OH-Funktionalisierung von POM-Typen ableiten, die weiter unten als POM der optionalen Komponente d) beschrieben sind.

Die POM-Polymeren der Komponente a) haben im allgemeinen einen Schmelzflussindex MVR von kleiner als 20 cm³ / 10 Minuten, vorzugsweise von kleiner als 10 cm³ / 10 Minuten, insbesondere von 0,5 bis 5 cm³ / 10 Minuten, und ganz besonders bevorzugt von 0,2 bis 1,9 cm³ / 10 Minuten (gemessen jeweils bei 190°C und 2,16 kg Belastung nach ISO 1133). Es handelt sich dabei also um vergleichsweise hochviskose Polymere.

Ein wesentliches Merkmal der als Komponente a) eingesetzten POM-Typen ist deren geringer Gehalt an einem Anteil von niedermolekularen Bestandteilen, wobei es sich bei niedermolekularen Bestandteilen um Polymere mit Molekular-gewichten unterhalb von 10.000 Dalton handelt.

Der Anteil dieser niedermolekularen Bestandteile beträgt 0 bis weniger als 5 Gew. %.

Die Herstellung des POM der Komponente a) kann durch Polymerisation von Polyoxymethlyen-bildendenden Monomeren, wie Trioxan oder einem Gemisch von Trioxan und Dioxolan, in Gegenwart von Ethylenglykol als Molekular-gewichtsregler durchgeführt werden. Die Polymerisation kann als Fällungs-polymerisation erfolgen oder insbesondere in der Schmelze. Als Starter können die an sich bekannten Verbindungen, wie Trifluormethansulfonsäure, eingesetzt werden, wobei diese vorzugsweise als Lösung in Ethylenglykol dem Monomeren zugesetzt werden. Durchführung und Beendigung der Poly-merisation sowie Aufarbeitung des erhaltenen Produktes können nach an sich bekannten Verfahren erfolgen. Durch geeignete Wahl der Polymerisations-parameter, wie Polymerisationsdauer oder Menge des Molekulargewichts-reglers, kann das Molekulargewicht und somit der MVR-Wert des entstehenden Polymeren eingestellt werden. Dem Fachmann sind die Auswahltkriterien dafür bekannt.

Die oben beschriebene Durchführung der Polymerisation führt in der Regel bereits zu Polymeren mit vergleichsweise geringen Anteilen an nieder-molekularen Bestandteilen.

Sollte eine weitere Verringerung des Gehalts an niedermolekularen Bestand-teilen gewünscht werden oder erforderlich sein, so kann das durch Abtrennung der niedermolekularen Anteile des Polymeren im Anschluss an die Desaktivierung und den Abbau der instabilen Anteile nach Behandlung mit einem basisch gestellten protischen Lösungsmittel vorgenommen werden.

Dabei kann es sich um eine fraktionierte Fällung aus einer Lösung des stabilisierten Polymers handeln, wobei Polymerfraktionen unterschiedlicher Molekulargewichtsverteilung erhalten werden.

Als Komponente b) enthalten die erfindungsgemäßen Zusammensetzungen thermoplastische Elastomere, welche vorzugsweise aktive Wasserstoffatome aufweisen.

Darunter sind solche thermoplastischen Elastomeren zu verstehen, die unter den gewählten Verarbeitungsbedingungen mit den Hydroxylgruppen der Komponente a) und einem gegebenenfalls als Komponente c) eingesetzten Kopplungsreagenz kovalente Bindungen einzugehen vermögen.

Beispiele für thermoplastische Elastomere sind Polyester-Elastomere (TPE-E), thermoplastische Polyamid-Elastomere (TPE-A) und insbesondere thermoplastische Polyurethan-Elastomere (TPE-U). Diese thermoplastischen Elastomeren weisen aktive Wasserstoffatome auf, die mit dem Kopplungs-reagenz c) umgesetzt werden können. Beispiele für solche Gruppen sind Urethangruppen, Amidgruppen, Aminogruppen oder Hydroxylgruppen beispielsweise von endständigen Polyesterdiol-Weichsegmenten thermoplastischer Polyurethan-Elastomerer, die Wasserstoffatome aufweisen, welche beispielsweise mit Isocyanatgruppen abreagieren können.

Besonders bevorzugt eingesetzte Komponenten b) sind thermoplastische Polyester-Elastomere (TPE-E), thermoplastische Polyamid-Elastomere (TPE-A) thermoplastische Polyurethan-Elastomere (TPE-U) oder eine Kombination von mehreren dieser thermoplastischen Elastomeren.

Die Anwesenheit eines Kopplungsreagenz c) ist nicht zwingend wohl aber bevorzugt, da sich dadurch die Kerbschlagzähigkeit des Formkörpers nochmals steigern lässt.

Zur Ausbildung von Brückengruppen zwischen den Komponenten a) und b) können unterschiedlichste multifunktionelle, vorzugsweise tri- oder insbe-sondere bifunktionelle Kopplungsreagenzien c) eingesetzt werden, die mit den Hydroxylgruppen der Komponente a) einerseits und den aktiven Wasserstoffatomen der Komponente b) andererseits kovalente Bindungen auszubilden vermögen.

Bevorzugt handelt es sich bei Komponente c) um ein Diisocyanat, vorzugs-weise um ein aliphatisches, cycloaliphatisches und/oder aromatisches Diisocyanat.

Komponente c) kann auch in Form von Oligomeren, vorzugsweise Tri- oder insbesondere Dimeren, gegebenenfalls in Mischung zusammen mit einem Polymeren eingesetzt werden.

Beispiele für Diisocyanate sind aromatische Diisocyanate, wie Toluoldiiso-cyanat, Naphthyldiisocyanate, Diphenyl-methan-2,4'-diisocyanat oder 4,4'-Diisocyanatodiphenylmethan; oder (cyclo)aliphatische Diisocyanate, wie Hexamethylendiisocyanat oder Isophorondiisocyanat.

Neben den Komponenten a), b) und gegebenenfalls c) können die erfindungsgemäßen Formmassen gegebenenfalls noch konventionelle Oxymethylenhomopolymere und/oder Oxymethylencopolymere als Komponente d) enthalten. Diese unterscheiden sich von den aktive Wasserstoffatome enthaltenden POM-Typen der Komponente a).

Bei den Polyoxymethylenen, wie sie beispielsweise in der DE-A-29 47 490 beschrieben sind, handelt es sich im Allgemeinen um unverzweigte lineare Polymere, die in der Regel mindestens 80 %, vorzugsweise mindestens 90 %, Oxymethyleneinheiten (-CH₂-O-) enthalten. Der Begriff Polyoxymethylene umfasst dabei sowohl Homopolymere des Formaldehyds oder seiner cyclischen Oligomeren, wie Trioxan oder Tetroxan als auch entsprechende Copolymere.

Derartige POM-Homo- oder Copolymerisate sind dem Fachmann an sich bekannt und in der Literatur beschrieben.

Die erfindungsgemässen Formmassen bzw. Formkörper können gegebenen-falls durch bekannte Zusätze stabilisiert und/oder modifiziert werden. Derartige als optionale Komponente e) eingesetzte Stabilisatoren und Verarbeitungshilfs-mittel sind dem Fachmann bekannt.

Bei den Stabilisatoren handelt es sich beispielsweise um Antioxidantien, Säurefänger, Formaldehydfänger, UV-Stabilisatoren oder Wärme-Stabilisatoren. Daneben kann die Formmasse bzw. der Formkörper Verarbeitungshilfsmittel enthalten, beispielsweise Haftvermittler, Gleitmittel, Nukleierungsmittel, Entformungsmittel, Füllstoffe, Verstärkungsmaterialien oder Antistatika sowie Zusätze, die der Formmasse bzw. dem Formkörper eine gewünschte Eigen-schaft verleihen, wie Farbstoffe und/oder Pigmente und/oder weitere Schlag-zähmodifiziermittel und/oder elektrische Leitfähigkeit vermittelnde Zusätze; sowie Mischungen dieser Zusätze, ohne jedoch den Umfang auf die genannten Beispiele zu beschränken.

Die Menge an Komponente a) in den erfindungsgemäßen Formmassen bzw. Formkörpern beträgt 30 bis weniger als 95 Gew. %.

Die Menge an Komponente b) in den erfindungsgemäßen Formmassen bzw. Formkörpern beträgt mindestens 5 Gew. %, vorzugsweise 5 bis 50 Gew. %, insbesondere 15 bis 40 Gew. %.

Die Menge an Komponente c) in den erfindungsgemäßen Formmassen bzw. Formkörpern beträgt mehr als 0 bis 10 Gew. %, vorzugsweise 0 bis 5 Gew. %, insbesondere 0,1 bis 2 Gew. %.

Die Menge an Komponente d) in den erfindungsgemäßen Formmassen bzw. Formkörpern beträgt 0 bis 65 Gew. %, vorzugsweise 0 bis 50 Gew. %.

Die Menge an Komponente e) in den erfindungsgemäßen Formmassen bzw. Formkörpern beträgt 0 bis 10 Gew. %, vorzugsweise 0 bis 5 Gew. %.

Dabei beziehen sich die Mengenangaben für die Komponenten a) bis e) auf die Gesamtmasse der Formmasse bzw. des Formkörpers.

Die erfindungsgemäßen Formmassen lassen sich durch Vermischen der Komponenten a) und b) sowie der gegebenenfalls anwesenden Komponenten c), d) und/oder e) herstellen.

Die Umsetzung der reaktiven Komponenten a), b) und c) kann getrennt von der Zugabe der optionalen Komponenten d) und/oder e) erfolgen. Auch die Herstellung des Umsetzungsproduktes aus Komponenten a), b) und c) kann in mehreren Schritten erfolgen, beispielsweise durch Umsetzung von Komponenten a) und c) gefolgt von der Umsetzung des Reaktionsproduktes mit Komponente b).

Vorzugsweise werden sämtliche Komponenten der Zusammensetzung miteinander vermischt und anschließend in der Schmelze, beispielsweise in einem Extruder, zur Reaktion gebracht.

Die Umsetzung der Komponenten erfolgt typischerweise bei Temperaturen zwischen 100 und 240°C, vorzugsweise 150 und 220°C, und die Reaktionsdauer beträgt typischerweise zwischen 0,5 und 60 Minuten.

Der Anteil an Kopplungsreagenz c) kann in breiten Grenzen gewählt werden. Vorzugsweise setzt man so viel Kopplungsreagenz ein, dass auf ein Mol aktive Wasserstoffatome, beispielsweise in Form von Hydroxyl-gruppen, des aktive Wasserstoffatome enthaltenden Polyoxymethylens 0,2 bis 2,0 Mol, vorzugsweise 0,5 bis 2,0 Mol des multifunktionellen Kopplungsreagenz entfallen.

Die Weiterverarbeitung der erfindungsgemäßen Formmassen kann durch Vermischen der feinteiligen, beispielsweise pulverförmigen oder granulierten Komponenten und anschließende thermoplastische Verarbeitung erfolgen oder durch Mischen der Komponenten in dafür geeigneten beheizbaren Mischaggregaten. Geeignete Mischaggregate und -verfahren sind beispielsweise beschrieben in: Saechtling, Kunststoff-Taschenbuch, Hanser Verlag, 27. Auflage 1998, auf den Seiten 202 bis 217, worauf Bezug genommen wird.

Die erfindungsgemäßen Formmassen lassen sich für Formteile jeglicher Art, insbesondere für Formteile, die in der Automobilindustrie eingesetzt werden, verwenden.

Dabei kann es sich beispielsweise um Formteile zur Anwendung im Automobilinnenraum handeln, vorzugsweise um Clips zur Befestigung von Kabel-strängen, Befestigungshalterungen oder -schienen zur Befestigung von Innenraum-Komponenten, wie Airbags, sowie um Lautsprechergitter, Gurtentriegelungstasten oder Abdeckkappen.

Es kann sich auch um Formteile zur Anwendung im Automobilaußenbereich handeln, vorzugsweise um Antennenbuchsen oder um Scheibenwischerabdeckkappen.

Die Verarbeitung der erfindungsgemäßen Formmassen kann durch beliebige Formverfahren erfolgen, vorzugsweise durch Spritzguss.

Die Erfindung betrifft auch die Verwendung der Formmassen für die oben genannten Zwecke.

Die nachfolgenden Beispiele erläutern die Erfindung ohne diese zu begrenzen. Mengenangaben erfolgen dabei, sofern nichts anderes angegeben ist, immer in Gewichtsteilen.

Allgemeine Herstellungsvorschrift für ein Hydroxylendgruppen terminiertes Polyoxymethylen

Trioxan und Dioxolan wurden über separate Dosierpumpen im gewünschten Mischungsverhältnis in einer Monomerleitung gemischt. Als Initiator wurde Triflfuormethansulfonsäure verwendet, der in Ethylenglylkol gelöst in das Monomergemisch dosiert wurde. Außerdem wurde Ethylenglykol als Molekulargewichtsregler in den Monomerstrom dosiert, um das gewünschte MVR einzustellen. Monomerstrom und Initiatorstrom wurden am Reaktoreingang in einer Vormischzone gemischt und nach Erreichen des Gleichgewichtsumsatzes wurde die Reaktion mit Triethylamin gequencht. Daran anschließend wurden in einer Hydrolysezone die instabilen Kettenenden abgebaut. Nach Austrag aus dem Reaktor wurde das Produkt in einem Entgasungsextruder weitgehend von den Restmonomeren befreit. Daran schlossen sich eine Gegenstromextraktion sowie eine Trocknung des erhaltenen Polymeren an.

In den durchgeführten Untersuchungen wurden folgende Komponenten eingesetzt:

| | |
|---|---|
| POM-0: | MVR 7,0 cm³ / 10 Minuten; Anteil an Komponenten mit niedrigem Molekulargewicht: 4-5 Gew. %; Anteil an OH-Endgruppen: 6-8 mmol/kg |
| POM-1: | MVR 2,0 cm³ / 10 Minuten; Anteil an Komponenten mit niedrigem Molekulargewicht: 0 Gew. %; Anteil an OH-Endgruppen: |
| | 20-25 mmol/kg |
| POM-2: | MVR 8,0 cm³ / 10 Minuten; Anteil an Komponenten mit niedrigem Molekulargewicht: 0 Gew. %; Anteil an OH-Endgruppen: 20-25 mmol/kg |
| POM-3: | MVR 9,6 cm³ / 10 Minuten; Anteil an Komponenten mit niedrigem Molekulargewicht: 8-9 Gew. %; Anteil an OH-Endgruppen: 25-30 mmol/kg |
| TPE-U: | Thermoplastisches Polyurethan Granulat, Härte 80-85 Shore A (DIN 53505), MFR 30-80 g/10min bei 210°C, 10kg (ISO 1133) |
| Koppler-A: | Toluoldiisocyanat-Dimer (TDI-Dimer), 20-30 Gew.-%-iges Konzentrat |
| Koppler-B: | Methylendiphenyl-4,4'-diisocyanat (MDI); 18-25 Gew.-%-iges Konzentrat |
| Koppler-C: | Methylendiphenyl-4,4'-diisocyanat (MDI); 12-20 Gew.-%-iges Konzentrat |
| Koppler-D: | Methylendiphenyl-4,4'-diisocyanat (MDI); 97-99 Gew.-% |

Alle Komponenten wurden zunächst bei ca. 70 °C in einem Vakuumofen der Fa. Binder getrocknet und anschließend auf einem Mischer der Fa. Dirk und Söhne (Modell Diosna R 10 A) gemischt. Für die Compoundierung wurde ein Extruder der Fa. Berstorff (Modell ZE 25) verwendet (Zonentemperatur 190°C, Massetemperatur ca. 210°C). Die Schneckenkonfiguration mit Knetelementen wurde so gewählt, daß eine effektive Durchmischung der Komponenten während der Reaktivextrusion gegeben war.

Die Ausprüfung der hergestellten Compounds erfolgte gemäß folgender Normen:
- MVR (190°C, 2,16kg): ISO 1133
- Charpy Kerbschlagzähigkeit: ISO 179-1/1 eA (CNI)

Die Ergebnisse sind in der nachfolgenden Tabelle aufgelistet.

| Beispiel Nr. | Komp. a) / Anteil (Gew. %) | Komp. b) / Anteil (Gew. %) | Komp. c) / Anteil (Gew. %) | MVR 2,16 (cm³/10) | CNI (+23°C) (kJ/m²) |
|---|---|---|---|---|---|
| 1 (Vergleich) | POM-0/82 | TPE-U/18 | - | 7,0 | 14,0 |
| 2 (Vergleich) | POM-O/81,1 | TPE-U/18 | Koppler-A/1,83 | 5,0 | 17,1 |
| 3 (Vergleich) | POM-0/80,2 | TPE-U/18 | Koppler-C/1,8 | 5,1 | 18,3 |
| 4 (Vergleich) | POM-2/82 | TPE-U/18 | - | 6,2 | 22,4 |
| 5 | POM-2/78,4 | TPE-U/18 | Koppler-A/3,66 | 4,8 | 29,6 |
| 6 | POM-2/78,4 | TPE-U/18 | Koppler-B/3,60 | 1,4 | 31,0 |
| 7 (Vergleich) | POM-3/80,3 | TPE-U/18 | Koppler-A/1,8 | 5,7 | 19,3 |
| 8 (Vergleich) | POM-3/80,3 | TPE-U/18 | Koppler-B/1,8 | 5,3 | 21,4 |
| 9 (Vergleich) | POM-3/81,1 | TPE-U/18 | Koppler-D/0,9 | 1,9 | 29,1 |
| 10 (Vergleich) | POM-3/62 | TPE-U/38 | - | 7,6 | 36,8 |
| 11 (Vergleich) | POM-3/60,8 | TPE-U/38 | Koppler-A/1,2 | 5,4 | 71,2 |
| 12 (Vergleich) | POM-3/61 | TPE-U/38 | Koppler-B/1,0 | 6,2 | 48,0 |
| 13 (Vergleich) | POM-1/82 | TPE-U/18 | - | 1,7 | 39,9 |
| 14 | POM-1/81,1 | TPE-U/18 | Koppler-A/0,87 | 1,4 | 50,4 |
| 15 | POM-1/80,8 | TPE-U/18 | Koppler-A/1,15 | 1,3 | 69,6 |
| 16 | POM-1/80,2 | TPE-U/18 | Koppler-A/1,8 | 1,0 | 117,9 |
| 17 (Vergleich) | POM-1/62 | TPE-U/38 | - | 2,5 | 87,7 |
| 18 | POM-1/60,3 | TPE-U/38 | Koppler-A/1,74 | 1,2 | 140,9 |

## Patentansprüche

1. Formmasse enthaltend
a) 30 bis weniger als 95 Gew.-%, bezogen auf die Gesamtmasse der Formmasse, Polyoxymethylen, bei dem mindestens 50 % der Endgruppen Hydroxylgruppen sind, das einen Schmelzflussindex MVR von kleiner als 20 cm³ /10 Minuten aufweist, gemessen nach ISO 1133 bei 190°C und 2,16 kg, und dessen Anteil an niedermolekularen Bestandteilen mit Molekulargewichten unterhalb von 10.000 Dalton von 0 bis weniger als 5 Gew.% beträgt, bezogen auf die Gesamtmasse des Polyoxymethylens,
b) mindestens 5 Gew.-% thermoplastisches Elastomer, **dadurch gekennzeichnet, dass** das thermoplastische Elastomer aktive Wasserstoffatome aufweist und dass mindestens eine Komponente c) vorhanden ist, die Gruppen zur kovalenten Kopplung der Komponenten a) und b) in einer Menge von mehr als 0 bis 10 Gew.-% enthält.

2. Formmasse nach Anspruch 1, **dadurch gekennzeichnet, dass** das Polyoxymethylen einen Schmelzflussindex MVR von kleiner als 10, insbesondere von 0,5 bis 5 cm³ /10 Minuten, und ganz besonders bevorzugt von 0,2 bis 1,9 cm³ /10 Minuten aufweist.

3. Formmasse nach einem der Ansprüche 1 bis 2, **dadurch gekennzeichnet, dass** der Anteil des thermoplastischen Elastomeren 15 bis 50 Gew. %, bezogen auf die Formmasse, beträgt.

4. Formmasse nach einem der Ansprüche 1 bis 3, **dadurch gekennzeichnet, dass** Komponente a) ein Polyoxymethylen-Homo- oder -Copolymer mit mindestens 50 %, vorzugsweise mindestens 70 %, bezogen auf die Gesamtanzahl der Endgruppen, an endständigen Hydroxyalkylengruppen, vorzugsweise Hydroxyethylengruppen, ist.

5. Formmasse nach Anspruch 1, **dadurch gekennzeichnet, dass** Komponente c) ein Diisocyanat, vorzugsweise eine aliphatisches, cycloaliphatisches und/oder aromatisches Diisocyanat ist.

6. Formmasse nach einem der Ansprüche 1 bis 4, **dadurch gekennzeichnet, dass** Komponente b) ein thermoplastisches Polyester-Elastomer (TPE-E), ein thermoplastisches Polyamid-Elastomer (TPE-A) und/oder insbesondere ein thermoplastisches Polyurethan-Elastomer (TPE-U) ist.

7. Formmasse nach einem der Ansprüche 1 bis 6, **dadurch gekennzeichnet, dass** diese zusätzlich als Komponente d) ein von Komponente a) verschiedenes Oxymethylenhomo- und/oder Oxymethylencopolymeres enthält.

8. Formmasse nach einem der Ansprüche 1 bis 7, **dadurch gekennzeichnet, dass** diese zusätzlich als Komponente e) Stabilisatoren und Verarbeitungshilfsmittel enthält.

9. Formmasse nach einem der Ansprüche 1 bis 8, **dadurch gekennzeichnet, dass** die Menge an Komponente a) 30 bis weniger als 95 Gew. %, die Menge an Komponente b) 5 bis 50 Gew. %, die Menge an Komponente c) mehr als 0 bis 10 Gew. %, die Menge an Komponente d) 0 bis 65 Gew. % und die Menge an Komponente e) 0 bis 10 Gew. % beträgt, wobei die Mengenangaben auf die Summe der Komponenten a), b), c), d) und e) bezogen sind.

10. Formteil erhältlich durch Verformen der Formmasse nach einem der Ansprüche 1 bis 9.

11. Verwendung der Formmassen nach einem der Ansprüche 1 bis 9 zur Herstellung von Formteilen, die in der Automobilindustrie eingesetzt werden.

12. Verwendung nach Anspruch 11, **dadurch gekennzeichnet, dass** die Formteile im Automobilinnenraum eingesetzt werden, vorzugsweise als Clips zur Befestigung von Kabelsträngen, Befestigungshalterungen oder Befestigungsschienen zur Befestigung von Innenraum-Komponenten, insbesondere von Airbags, sowie als Lautsprechergitter, Gurtentriegelungstasten oder Abdeckkappen.

13. Verwendung nach Anspruch 11, **dadurch gekennzeichnet, dass** die Formteile im Automobilaußenbereich eingesetzt werden, vorzugsweise als Antennenbuchsen oder als Scheibenwischerabdeckkappen.

## Claims

1. A molding material containing:
a) 30 to less than 95% by weight, based on the total mass of the molding material,
polyoxymethylene in which at least 50% of the terminal groups are hydroxyl groups, which has a melt volume rate MVR of less than 20 cm³/10 minutes, measured according to ISO 1133 at 190°C and 2.16 kg, and the proportion thereof of low molecular weight constituents having molecular weights below 10 000 Dalton is 0 to less than 5% by weight, based on the total mass of the polyoxymethylene,
b) at least 5% by weight, thermoplastic elastomer, **characterized in that** the thermoplastic elastomer has active hydrogen atoms and that at least one component c) which contains groups for covalent coupling of the components a) and b) is present in an amount of from more than 0 to 10% by weight.

2. The molding material as claimed in claim 1, **characterized in that** the polyoxymethylene has a melt volume rate MVR of less than 10, in particular of from 0.5 to 5 cm³/10 minutes and very particularly preferably from 0.2 to 1.9 cm³/10 minutes.

3. The molding material as claimed in any of claims 1 to 2, **characterized in that** the proportion of the thermoplastic elastomer is 15 to 50% by weight, based on the molding material.

4. The molding material as claimed in any of claims 1 to 3, **characterized in that** component a) is a polyoxymethylene homo- or copolymer having at least 50%, preferably at least 70%, based on the total number of terminal groups, of terminal hydroxyalkylene groups, preferably hydroxyethylene groups.

5. The molding material as claimed in claim 1, **characterized in that** component c) is a diisocyanate, preferably an aliphatic, cycloaliphatic and/or aromatic diisocyanate.

6. The molding material as claimed in any of claims 1 to 4, **characterized in that** component b) is a thermoplastic polyester elastomer (TPE-E), a thermoplastic polyamide elastomer (TPE-A) and/or in particular a thermoplastic polyurethane elastomer (TPE-U).

7. The molding material as claimed in any of claims 1 to 6, **characterized in that** it additionally contains, as component d) an oxymethylene homopolymer and/or oxymethylene copolymer differing from component a).

8. The molding material as claimed in any of claims 1 to 7, **characterized in that** it additionally contains stabilizers and processing auxiliaries as component e).

9. The molding material as claimed in any of claims 1 to 8, **characterized in that** the amount of component a) is from 30 to less than 95% by weight, the amount of component b) is from 5 to 50% by weight, the amount of component c) is from more than 0 to 10% by weight, the amount of component d) is from 0 to 65% by weight and the amount of component e) is from 0 to 10% by weight, wherein the stated amounts being based on the sum of the components a), b), c), d) and e).

10. A shaped article obtainable by molding the molding material as claimed in any of claims 1 to 9.

11. The use of the molding materials as claimed in any of claims 1 to 9 for the production of shaped articles which are used in the automotive industry.

12. The use as claimed in claim 11, **characterized in that** the shaped articles are used in the interior of automobiles, preferably as clips for fixing cable harnesses, fixing holders or fixing rails for fixing interior components, in particular air bags, and as loudspeaker grilles, belt release buttons or caps.

13. The use as claimed in claim 11, **characterized in that** the shaped articles are used on the exterior of automobiles, preferably as antenna sockets or as windscreen wiper caps.

## Revendications

1. Mélange à mouler, contenant
a) 30 à moins de 95 % en poids, par rapport à la masse totale du mélange à mouler, de polyoxyméthylène, dans lequel au moins 50 % des groupes terminaux sont des groupes hydroxyle, qui présente un indice de fluidité en volume MVR inférieur à 20 cm³/10 minutes, mesuré selon ISO 1133 à 190°C sous 2,16 kg, et dont la teneur en constituants à faible masse moléculaire ayant une masse moléculaire inférieure à 10 000 Daltons est comprise entre 0 et moins de 5 % en poids, par rapport à la masse totale du polyoxyméthylène,
b) au moins 5 % en poids d'un élastomère thermoplastique, **caractérisé en ce que** l'élastomère thermoplastique comprend des atomes d'hydrogène actif, et qu'au moins un composant c) est présent, qui contient des groupes pour couplage par liaison covalente des composants a) et b), en une quantité supérieure à 0 et allant jusqu'à 10 % en poids.

2. Mélange à mouler selon la revendication 1, **caractérisé en ce que** le polyoxyméthylène présente un indice de fluidité en volume MVR inférieur à 10, en particulier de 0,5 à 5 cm³/10 minutes et d'une manière tout particulièrement préférée de 0,2 à 1,9 cm³/10 minutes.

3. Mélange à mouler selon l'une des revendications 1 à 2, **caractérisé en ce que** la teneur en l'élastomère thermoplastique est de 15 à 50 % en poids, par rapport au mélange à mouler.

4. Mélange à mouler selon l'une des revendications 1 à 3, **caractérisé en ce que** le composant a) est un homo- ou un copolymère de polyoxyméthylène, comprenant au moins 50 %, de préférence au moins 70 %, par rapport au nombre total des groupes terminaux, de groupes terminaux hydroxyalkylène, de préférence hydroxyéthylène.

5. Mélange à mouler selon la revendication 1, **caractérisé en ce que** le composant c) est un diisocyanate, de préférence un diisocyanate aliphatique, cycloaliphatique et/ou aromatique.

6. Mélange à mouler selon l'une des revendications 1 à 4, **caractérisé en ce que** le composant b) est un élastomère de polyester thermoplastique (TPE-E), un élastomère de polyamide thermoplastique (TPE-A) et/ou en particulier un élastomère de polyuréthanne thermoplastique (TPE-U).

7. Mélange à mouler selon l'une des revendications 1 à 6, **caractérisé en ce qu'**il contient en outre en tant que composant d) un homopolymère d'oxyméthylène et/ou un copolymère d'oxyméthylène différents du composant a).

8. Mélange à mouler selon l'une des revendications 1 à 7, **caractérisé en ce qu'**il contient en outre en tant que composant e) des stabilisants et des auxiliaires de mise en oeuvre.

9. Mélange à mouler selon l'une des revendications 1 à 8, **caractérisé en ce que** la quantité du composant a) est de 30 à moins de 95 % en poids, la quantité du composant b) est de 5 à 50 % en poids, la quantité du composant c) est supérieure à 0 à 10 % en poids, la quantité du composant d) est de 0 à 65 % en poids, et la quantité du composant e) est de 0 à 10 % en poids, les indications de quantité étant rapportées à la somme des composants a), b), c), d) et e).

10. Pièce moulée pouvant être obtenue par formage du mélange à mouler selon l'une des revendications 1 à 9.

11. Utilisation des mélanges à mouler selon l'une des revendications 1 à 9 pour fabriquer des pièces moulées qui sont utilisées dans l'industrie automobile.

12. Utilisation selon la revendication 11, **caractérisée en ce que** les pièces moulées sont utilisées dans l'habitacle intérieur d'une automobile, de préférence en tant qu'agrafes pour la fixation de faisceaux de câbles, attaches de fixation ou rails de fixation pour fixer des composants de l'habitacle intérieur, en particulier d'airbags, ainsi qu'en tant que grilles de haut-parleurs, touches de déverrouillage de ceinture, ou chapeaux de recouvrement.

13. Utilisation selon la revendication 11, **caractérisée en ce que** les pièces moulées sont utilisées dans le domaine extérieur d'une automobile, de préférence en tant que douilles d'antenne ou en tant que chapeaux de recouvrement d'essuie-glaces.
